(19)

Europäisches
Patentamt
European
Patent Office
Office européen
des brevets

(11) **EP 4 307 012 A1**

(12) **EUROPEAN PATENT APPLICATION**

(43) Date of publication:
 **17.01.2024 Bulletin 2024/03**

(21) Application number: **22184206.5**

(22) Date of filing: **11.07.2022**

(51) International Patent Classification (IPC):
 **G01S 19/39** (2010.01)   G01S 19/43 (2010.01)
 **G01S 19/32** (2010.01)

(52) Cooperative Patent Classification (CPC):
 **G01S 19/396;** G01S 19/32; G01S 19/43

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(71) Applicant: **u-blox AG
 8800 Thalwil (CH)**

(72) Inventors:
 • **JULIEN, Olivier
  Oberrieden (CH)**
 • **SHERET, Ian
  Hitchin (GB)**
 • **HIDE, Christopher
  Reigate (GB)**
 • **DORAHY, Hayden
  Leatherhead (GB)**
 • **BRYANT, Roderick
  Conder (AU)**

(74) Representative: **Elkington and Fife LLP
 Prospect House
 8 Pembroke Road
 Sevenoaks, Kent TN13 1XR (GB)**

(54) **GNSS MEASUREMENT PROCESSING AND RESIDUAL ERROR MODEL ESTIMATION**

(57)   A method and apparatus are provided for processing a plurality of GNSS measurements to infer state information. The method includes obtaining a plurality of quality indicators associated with each GNSS measurement. A space of joint values of the plurality of quality indicators is divided into at least a first region and a second region. Neither the first region nor the second region is box-shaped. The method determines whether the plurality of quality indicators fall within the first region or the second region. If the plurality of quality indicators fall within the first region, the GNSS measurement in question is included in the processing to infer the state information. Also provided is a method of estimating residual error models for GNSS measurements, based on training data.

FIG. 7

**Description**

FIELD OF THE INVENTION

The present invention relates to Global Navigation Satellite Systems (GNSS). In particular, it relates to a method and apparatus for processing GNSS measurements to infer state information, as well as a method and apparatus for estimating a residual error model. Results of the error model estimation can be used to support the inference of the state information.

BACKGROUND OF THE INVENTION

Techniques for GNSS positioning are well known in the art. Existing GNSS include the Global Positioning System (GPS), Galileo, GLONASS, and BeiDou Navigation Satellite System (BDS), also referred to herein simply as "BeiDou". Each GNSS comprises a constellation of satellites, also known in the art as "space vehicles" (SVs), which orbit the earth. Typically, each SV transmits a number of satellite signals. These are received by a GNSS receiver for which it is desired to calculate state information, such as a navigation solution. The GNSS receiver can generate a number of ranging and/or Doppler measurements using the signals, to derive information about the distance between the receiver and respective satellites (and/or the rate of change of these distances). When a sufficient number of measurements can be made, the receiver's position and/or velocity can then be calculated.

Various effects can introduce errors into the measurements. In turn, errors in the measurements can lead to errors in the resulting state estimate. Sources of error include, for example, multipath interference. This may be a particular problem for navigation systems for road vehicles. In the signal environments commonly encountered by road vehicles, multipath interference can be caused by reflection or occlusion of satellite signals by other vehicles, or by buildings or vegetation.

Other sources of error include variations in atmospheric delay, as the satellite signals pass through the troposphere or ionosphere. In addition to such "innocent" sources of error, there may be malicious interference, such as jamming or spoofing signals. Jamming signals are transmitted with the deliberate aim to prevent a GNSS receiver from receiving satellite signals successfully. Spoofing involves transmitting a signal that emulates a real satellite signal, with the intention that a GNSS receiver will mistakenly acquire and track the spoofed signal. This can be used by an attacker to deliberately introduce false information into the multilateration calculation, leading to a false position or velocity estimate.

Obviously, it would be desirable to calculate a state estimate as accurately as possible in spite of all of these sources of error. However, it is inevitable that they will sometimes cause the state estimate to be inaccurate. It is desirable to know whether a state estimate is accurate or not - and to quantify the expected accuracy. For example, in autonomous driving applications, it is very important to be able to determine when the uncertainty in the vehicle position is too great for the position estimate to be used safely to control navigation of the vehicle.

In this context, the concept of an "alert limit" or "alarm limit" is sometimes used. This may be defined as the maximum allowable error (for example, error in position) that can be permitted without triggering an alert or alarm.

The concept of "integrity risk" is also used. This may be defined as the probability that the actual position error exceeds the alert limit without any alerts at a given moment in time. The integrity risk thus describes the level of trust or confidence in the GNSS position estimate.

The uncertainty associated with a position estimate may be quantified in terms of a "protection level". This is defined as a statistical error bound, computed such that the probability of the position error exceeding the bound is less than or equal to a target integrity risk. The protection level may be provided in terms of a radius, in which case the protection level defines a circle in which there is a (quantifiably) high probability of the vehicle being located. A protection level can be used in conjunction with an alert limit, to alert a user of a navigation application, or to trigger other mitigating actions in an automated system. Whenever the protection level exceeds the alert limit, the system alerts the user or takes the necessary mitigating actions, as appropriate. There is, however, always a small risk that the position estimate deviates from the true position by more than the reported protection level. One of the aims of an integrity monitoring system is to minimise this risk by estimating the position or error bound - for example, the protection level - as reliably as possible.

EP 3 859 397 A1 discloses a method for determining a protection level of a position estimate using a single epoch of GNSS measurements. The method includes: specifying a prior probability density $P(x)$ of a state $x$; specifying a system model $h(x)$ that relates the state $x$ to observables $z$ of the measurements; quantifying quality metrics $q$ associated with the measurements; specifying a non-Gaussian residual error probability density model $f(r|\theta, q)$ and fitting model parameters $\theta$ using experimental data; defining a posterior probability density $P(x|z, q, \theta)$; estimating the state $x$; and computing the protection level by integrating the posterior probability density $P(x|z, q, \theta)$ over the state $x$. The non-Gaussian residual error probability density model is conditioned on the quality metrics. The residual error probability density model is estimated in advance. This may be done by carrying out a measurement campaign to gather real-world examples of quality metrics along with the residual measurement errors that were observed under the conditions that gave rise to those quality metrics.

SUMMARY OF THE INVENTION

As explained above, it is desirable to monitor integrity as accurately and reliably as possible. This depends, in part, on modelling the residual errors accurately. If a residual error probability density is estimated based on empirical data (as proposed in EP 3 859 397 A1, for example), then the resulting model can only be confidently assumed to be reliable in circumstances that are similar to those reflected in the empirical data. It is possible that conditions will be experienced during operation of the system that are different from any of the conditions encountered during the earlier measurement campaign. However good the model and however exhaustive the measurement campaign seeks to be, it is always possible in practice that previously unseen combinations of circumstances may arise in the future.

The present inventors have recognised that, in order to mitigate this fundamental challenge, it would be desirable to consider, when monitoring the integrity of a position estimate, whether the conditions currently encountered by the positioning system are reflected adequately in the residual error model. If the positioning system is currently dealing with conditions that were encountered rarely (or never) during the measurement campaign, then the residual error model might not be reliable, and therefore there is a risk that the integrity monitoring process could be compromised. By actively monitoring for and detecting this situation, the system can take suitable mitigating actions as appropriate.

According to an aspect of the present invention there is provided a method of processing a plurality of GNSS measurements to infer state information, the method comprising:

> obtaining the plurality of GNSS measurements,
> for each GNSS measurement:

>> obtaining a plurality of quality indicators associated with that GNSS measurement;
>> dividing a space of joint values of the plurality of quality indicators into at least a first region and a second region, wherein neither the first region nor the second region is box-shaped;
>> determining whether the plurality of quality indicators fall within the first region or the second region; and
>> responsive to the plurality of quality indicators falling within the first region, determining that the GNSS measurement should be included in the processing to infer the state information, and

> calculating the state information based on those GNSS measurements that it was determined should be included.

Optionally the method may comprise for each GNSS measurement, responsive to the plurality of quality indicators falling within the second region, determining that the GNSS measurement should be excluded from, or de-weighted in, the processing to infer the state information.

The GNSS measurements whose quality indicators fell in the second region may be discarded (or at least de-weighted). That is, they are either not used in the calculation of the state information or are used in such a way that they have less influence on the calculation than those whose quality indicators fell in the first region.

Each GNSS measurement may comprise at least one of: a carrier phase measurement, a pseudorange measurement, and a Doppler measurement.

Whether a particular combination of two quality indicators falls inside the first region or the second region depends on both quality indicators. The determination cannot be made based on a single quality indicator alone. For example, the first region and second region are not delineated solely by a threshold (or plurality of thresholds) applied to one of the quality indicators. Nor are they delineated solely by a threshold applied to two (or more) of the quality indicators independently.

Here, "box-shaped" refers to the shape of an orthotope (also known as a hyperrectangle or box). This geometric shape is a generalisation of a rectangle in any number of dimensions. Formally, an orthotope is defined as the Cartesian product of orthogonal intervals. When the plurality of quality indicators consists of exactly two quality indicators, the "box" shape refers to a rectangle. That is, when two-dimensional, the first region and the second region are nonrectangular.

Since the first region and second region are not box-shaped, they can provide a more sophisticated determination of whether a GNSS measurement should be included in, or excluded from, the calculation of the state information. This more sophisticated determination can take account of interdependencies between the quality indicators, rather than merely assessing the values of the individual quality indicators separately.

In some embodiments, the first region and the second region are defined the same for all of the GNSS measurements. In some other embodiments, the first region and/or the second region may be defined differently for different GNSS measurements.

The state information may include variables describing any one or any combination of two or more of: position, velocity, timing drift, and attitude. Calculating the state information may comprise calculating an estimate for any one or any combination of two or more state variables. Alternatively or in addition, calculating the state information may comprise calculating bounds for any one or any combination of two or more state variables.

For at least one of the GNSS measurements, the space may consist exclusively of the first region and the second region. That is, the first region and the second region together fully cover the space of joint values of the plurality of quality indicators. Each region is the complement of the other - points in the space that are not in the first region are in the second region, and vice versa.

For at least one of the GNSS measurements, the first region may comprise a central region of the space of joint values, and/or the second region may comprise a peripheral region of the space.

For at least one of the GNSS measurements, the second region may surround the first region in the space of joint values.

The method may further comprise, for at least one of the GNSS measurements, obtaining a probability density function defined over the space of joint values of the plurality of quality indicators, wherein the first region is defined as the region where the probability density function exceeds a predefined threshold.

The probability density function may be represented by one of: a non-parametric function; and a parametric function, the parametric function optionally comprising at least one of: a Gaussian function; and a sum of Gaussian functions.

A mixture of Gaussians has been found to work well as a parametric model for the probability density function. A mixture of Gaussians models the density function as a sum of a finite number of Gaussian distributions. Each Gaussian distribution can be characterised by a mean vector and a covariance matrix. This allows the mixture of Gaussians model to approximate a wide variety of joint probability density functions of the quality indicators with a relatively compact set of parameters. The use of a compact set of parameters is desirable in part because it reduces the number of parameters to be estimated, compared with a more elaborate model.

Suitable non-parametric functions include but are not limited to k-nearest-neighbours.

The method optionally further comprises obtaining, for the plurality of GNSS measurements, one or more residual error models, describing a probability distribution of errors in the GNSS measurements, wherein the probability distribution depends on the plurality of quality indicators, and wherein the calculation of the state information is based on the one or more residual error models.

The residual error model(s) may be generated in advance for use in the state-inference method. The residual error model(s) may be generated from empirical data, comprising GNSS measurements, quality indicators associated with those GNSS measurements, and residual errors associated with those GNSS measurements. Collectively, these may be referred to as empirical or training data.

The first region may be a region where the empirical data used to generate the residual error model was relatively dense. The second region may be a region where the empirical data was relatively sparse. In some examples, the first region may be defined as a dense region that contains a predetermined proportion of the empirical data. The second region may be defined as the remaining region of the space of joint values of the plurality of quality indicators.

The probability density function (and parametric function) mentioned above may describe a local density of the empirical data over the space of joint values of the plurality of quality indicators.

Optionally, the first region is defined as the region where the probability density function of the joint values of the plurality of quality indicators exceeds a threshold; and/or the second region is defined as the region where the probability density function does not exceed the threshold.

The probability distribution for each residual error (for each GNSS measurement) depends on the one or more quality indicators - that is, for different values of the quality indicator(s), the probability distribution for the residual error according to the model will be different. In the terminology of statistics, the probability distribution of the error is conditioned on the quality indicator(s).

Each quality indicator may be indicative of (for example, may quantify or correlate with) signal distortion of GNSS satellite signals received by a GNSS receiver. The quality indicators may be derived from analysis of the received GNSS signals.

The probability distribution may be defined by one or more parameters, wherein at least one of the parameters is a function of one or more of the quality indicators. That is, a change in the one or more quality indicators changes at least one parameter of the probability distribution.

The one or more parameters may include a parameter controlling a breadth of a peak in the distribution. The parameter may be a standard deviation or variance (or may be equivalent to a standard deviation or variance in its effect on the distribution). This parameter may be a function of one or more of the quality indicators.

The method may further comprise calculating the at least one parameter, wherein the at least one parameter is calculated as a polynomial function of one or more of the quality indicators. In particular, the variation of the parameter may be modelled by a truncated power series - for example, a third order truncated power series.

Calculating the state information based on the one or more residual error models optionally comprises determining an error bound for one or more state variables of a state vector based on the residual error models.

Calculating the state information based on the residual error models optionally comprises: calculating a posterior probability density for a state vector, based on the residual error model, wherein the state vector includes position variables; and integrating the posterior probability density with respect to position to determine a position estimate and/or bounds on the position variables.

The posterior probability density may be integrated to determine the protection level. Calculating the posterior probability density may comprise multiplying the probability distribution of the errors by a prior probability density of a state vector, wherein the state vector includes the position.

The posterior probability density may be calculated based on GNSS measurements from a single measurement epoch.

Integrating the posterior probability density may comprise numerical integration.

The plurality of quality indicators may comprise one or both of: a carrier-to-noise density ratio of a GNSS signal on which the respective GNSS measurement was made; and a window-based quality indicator, based on gathering similar GNSS measurements in a time window containing or near to an epoch of interest.

The windowed quality indicator may be based on determining a deviation of the respective GNSS measurement at the epoch of interest from a consensus among the gathered similar GNSS measurements in the window. Calculating the window-based quality indicator may comprise: gathering respective GNSS measurements at a plurality of epochs in the time window; determining a change in the GNSS measurements; identifying a consensus solution for a change in position and clock bias; and calculating the window-based quality indicator based on a deviation of the GNSS measurement at the epoch of interest from the consensus. In some examples, the epoch of interest may be outside the window but near to it - for example, the epoch of interest may be within 10, 5, 3, or 2 epochs of the window, or may be the epoch immediately before or after the epochs of the window. In other examples, the epoch of interest may be inside the window. This may be advantageous because an epoch inside the window has a greater likelihood of being consistent with the other measurements in the window, if the measurement is of good quality. In particular, in some examples, the epoch of interest may be the last epoch in the window. This may offer an advantage in that the latency of the window-based calculations can be minimised - the consensus within the window (and the deviation of the epoch of interest from it) can be determined immediately without waiting for any further epochs to complete the window.

According to another aspect of the present invention, there is provided a method of estimating one or more residual error models describing a probability distribution of errors in a plurality of GNSS measurements, wherein the probability distribution depends on a plurality of quality indicators, and wherein the one or more residual error models are to be used for inferring state information based on GNSS measurements, the method comprising:

> obtaining training data comprising a plurality of samples of the plurality of GNSS measurements, quality indicators associated with the samples, and residual errors associated with the plurality of samples;
> estimating a local density of the training data over a space of joint values of the plurality of quality indicators, to produce a probability density function; and
> estimating the one or more residual error models based on the training data.

The probability density function provides information about portions of the space where there is greater or lesser confidence in the accuracy of the residual error model. Portions of the space where there is a large amount of training data - that is, portions where the data is dense, and therefore the local density is high - may be treated as having a reliable, accurate residual error model. Portions of the space where there is very little training data - that is portions where the data is sparse, and therefore the local density is low - may be treated with greater caution. This information can be used subsequently, when inferring state information - for example, when calculating a position estimate, and/or when calculating an error bound for a position estimate based on the residual error model.

The method may comprise: before estimating the one or more residual error models, dividing the space of joint values of the plurality of quality indicators into at least a first region and a second region, wherein the first region is a region where the training data is relatively dense and the second region is a region where the training data is relatively sparse; identifying first samples that fall within the first region; identifying second samples that fall within the second region; and estimating the one or more residual error models based on the first samples.

Here, the density/sparsity of the training data refers to the local density of the samples in the space of joint values of the plurality of quality indicators. The dividing of the space of joint values may be based on the probability density function. In particular, the space may be divided by comparing the probability density function with a threshold. The first region may be defined as the region where the probability density function is greater than the threshold. The second region may be defined as the remainder of the space - the region where the probability density function is not greater than the threshold.

According to this approach, the step of estimating the one or more residual error models is not based on the second samples. That is, the second samples are excluded from the calculation of the one or more residual error models.

The one or more residual error models are estimated based solely on the first samples. Alternatively, the second samples may be included but de-weighted such that they have less influence than the first samples.

A method of estimating a residual error model as summarised above may be performed in advance, followed by a method of processing a plurality of GNSS measurements as summarised above.

The method of estimating the residual error model may be performed in a training phase or training mode. The method of processing the plurality of GNSS measurements may be performed in a deployment phase or deployment mode. The two methods may be performed using different devices or the same device.

Also provided is a computer program comprising computer program code configured to cause one or more processors to perform all the steps of the method as claimed in any one of the preceding claims when said computer program is run on said one or more processors. The one or more processors may comprise or consist of one or more processors of a GNSS receiver. The computer program may be stored on a computer-readable storage medium (optionally non-transitory).

Also provided is a GNSS receiver comprising:

a signal processing unit, configured to produce a plurality of GNSS measurements; and
at least one processor, configured to:

obtain the plurality of GNSS measurements, and
for each GNSS measurement:

obtain a plurality of quality indicators associated with that GNSS measurement;
divide a space of joint values of the plurality of quality indicators into at least a first region and a second region, wherein neither the first region nor the second region is box-shaped;
determine whether the plurality of quality indicators fall within the first region or the second region; and
responsive to the plurality of quality indicators falling within the first region, determine that the GNSS measurement should be included in processing to infer state information,

wherein the at least one processor is further configured to calculate the state information based on those GNSS measurements that it was determined should be included.

Optionally, the at least one processor may be configured to, responsive to the plurality of quality indicators falling within the second region, determine that the respective GNSS measurement should be excluded from the processing to infer the state information (or should be de-weighted in said processing, in particular relative to the GNSS measurements whose quality indicators fell within the first region).

The GNSS receiver may further comprise an RF front-end. The RF front-end may be configured to receive GNSS signals via an antenna. The signal processing unit may be configured to make GNSS measurements (for example, pseudorange measurements and/or carrier range measurements) on the GNSS signals received by the RF front-end.

BRIEF DESCRIPTION OF THE DRAWINGS

The invention will now be described by way of example with reference to the accompanying drawings, in which:

Fig. 1 is a schematic block diagram of a GNSS receiver according to an example;
Fig. 2 is a flowchart illustrating a method performed by the GNSS receiver of Fig. 1 according to an example;
Fig. 3 is a flowchart illustrating one way of dividing a space of joint values of quality indicators, in the method of Fig. 2;
Fig. 4 is a flowchart illustrating one way of inferring state information in the method of Fig. 2;
Fig. 5 is a flowchart illustrating the calculation of state bounds, according to an example;
Fig. 6 is a flowchart illustrating a method of estimating one or more residual error models according to an example; and
Fig. 7 is shows an example of a space of joint values of two quality indicators, divided into dense and sparse regions according to an example.

It should be noted that these figures are diagrammatic and not drawn to scale.

DETAILED DESCRIPTION

Reference will now be made in detail to embodiments of the invention, examples of which are illustrated in the accompanying drawings. The described embodiments should not be construed as being limited to the descriptions given in this section; the embodiments may have different forms.

For the understanding of the following description, it is assumed that the reader is familiar with the general principles described in EP 3 859 397 A1 (which is incorporated herein by reference).

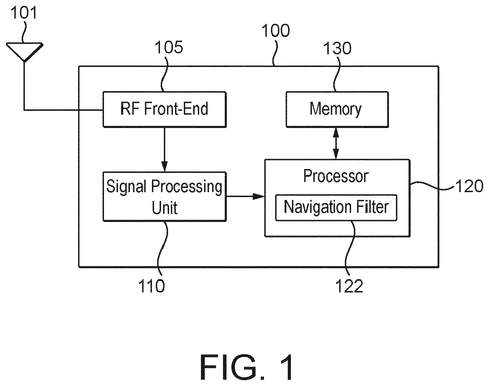

Fig. 1 is a schematic block diagram of a device according to an example. The device comprises a GNSS antenna 101 and a GNSS receiver 100. The GNSS antenna 101 is configured to receive GNSS signals. It may be configured to receive GNSS signals from a single GNSS constellation (for example, GPS), or it may be configured to receive GNSS signals from multiple constellations (for example, GPS, Galileo, GLONASS, and/or BeiDou). The GNSS receiver 100 comprises an RF front-end 105, a signal processing unit 110, a processor 120, and a memory 130. The RF front-end 105 is configured to receive GNSS signals via the GNSS antenna 101, and to output them to the signal processing unit 110. The RF front-end 105 is configured to down-convert and digitise the satellite signals received via the antenna 101. The RF front-end essentially conditions the signals for subsequent signal processing. Other typical tasks performed by the front-end include filtering and amplification. The satellite signals received at the RF front-end 105 via the antenna 101 include at least one ranging signal, such as a GPS L1 C/A signal, for each of a plurality of satellites. The signal processing unit 110 is configured to track the received GNSS signals - for example, in frequency, delay (code-phase) and carrier phase - and to produce GNSS measurements from the received GNSS signals. It is further configured to generate at least one quality indicator for each GNSS measurement. The processor 120 is configured to process the GNSS measurements obtained from the signal processing unit 110. While it should be understood that more than one processor may be present within the GNSS receiver 100 for implementing methods according to the present disclosure, for the purposes of the present description it is assumed that there is only one processor 120, as depicted in Fig. 1. In the present example, the processor implements a navigation filter 122 as described for the calculation of the single-epoch position bound in EP 3 859 397 A1. At each of a plurality of time increments (epochs), the navigation filter 122 estimates the current value of a state vector of state variables, optionally with their associated uncertainties. In the context of positioning, the state variables estimated by the navigation filter 122 generally include position and time variables, and optionally velocity and other variables. The memory 130 is in communication with the processor 120. The memory 130 is configured to store software/firmware to be executed by the processor 120. The software/firmware is configured to control the processor 120 to carry out a processing method according to an example. The memory may also be configured to store data that is used as input to the processor 120 and/or to store data that is output by the processor 120.

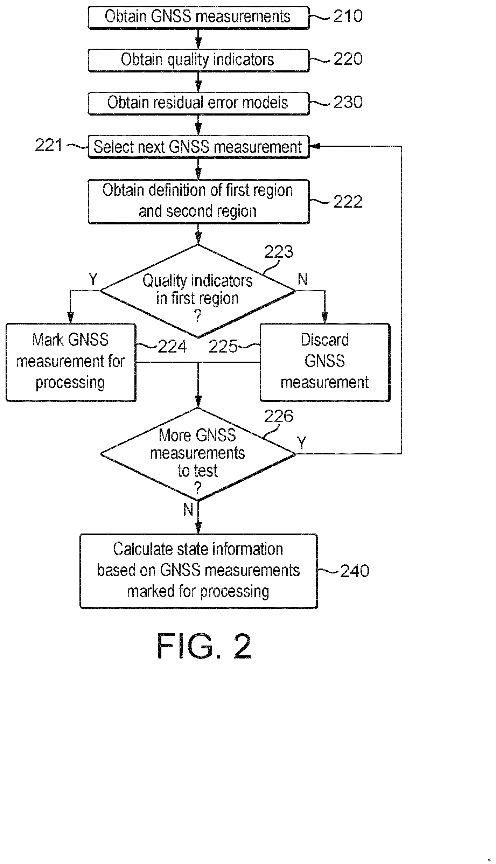

Fig. 2 illustrates a method performed by the processor 120 according to an example. In step 210, the processor 120 obtains a plurality of GNSS measurements from the signal processing unit 110. The GNSS measurements are all obtained from the same epoch - that is, they are all made by the signal processing unit 110 at substantially the same time. The GNSS measurements include at least carrier phase measurements. In the present example, they also include pseudorange measurements. Each measurement (be it a pseudorange measurement or a carrier phase measurement) relates to a particular GNSS signal transmitted by a particular satellite. In the present example, the plurality of GNSS measurements include pseudorange and carrier phase measurements for L1 and L2 signals of several GPS satellites. Typically, in order to calculate a position and time solution from the GNSS measurements alone, measurements of four signals from four respective satellites are obtained. In general, the measurements may relate to different satellites of the same constellation or, satellites of different constellations.

As mentioned above, the signal processing unit 110 is configured to provide one or more quality indicators associated with each GNSS measurement. The quality indicators quantify the quality of the measurements (or the GNSS signals on which the measurements are based). In particular, they quantify (or are correlated with) signal distortion. Suitable quality indicators can include but are not limited to: carrier-to-noise power ratio, carrier-to-noise density, carrier-to-noise density variability, carrier phase variance, multipath deviation, loss-of-lock detection, code lock time and phase lock time, satellite elevation, and satellite azimuth.

Measurements do not all have the same error distributions. Some measurements will have broader distributions and/or higher tail probabilities. For instance, measurements with low signal-to-noise density ratio will be noisier, as will measurements from satellites at low elevations. By taking into account effects such as these, examples according to the present disclosure can enable more accurate modelling of the error distributions. According to some examples, the error probability distributions described by the residual error models are conditioned on (that is, are dependent on) a number of quality indicators. Essentially, the quality indicators are predictive of the parameters of the error distribution.

In the present example, two quality indicators are used. The first is the carrier-to-noise density ratio of the GNSS signal from which the GNSS measurement (carrier phase or pseudorange) is derived. This quality indicator is provided by the signal processing unit 110.

The second quality indicator is a window-based quality indicator, which seeks to quantify the extent to which a given measurement is consistent with other measurements in a given time-window. This second quality indicator is calculated by the processor 120. The calculation starts by defining a window around the epoch of interest. The window width is a configurable parameter. The present exemplary implementation uses a half-width of two seconds. The window is symmetric; therefore, it has a full-width of four seconds, and will contain data from five epochs (that is, the number of samples $n_{samples} = 5$) assuming an interval of one second between successive epochs. Note that the use of epochs that are after the epoch of interest implies that the algorithm will have a certain latency (equal to the window half width) when implemented in a real-time system. In other examples, the latency could be reduced, if desired, by placing the epoch of interest closer to (or at) the end of the window.

The total number of signals is the sum of the number of signals in the L1 frequency band and the number of signals in the L2 band ($n_{sig} = n_{L1} + n_{L2}$). In order to be included, signals need to be present and have phase lock continuity for all of the epochs in the window. Signals that do not meet these criteria are excluded. The total number of phase measurements is given by $n_{samples} \times (n_{L1} + n_{L2})$. There will be an equal number of pseudorange measurements, making the total number of data points $m = 2n_{samples} \times (n_{L1} + n_{L2})$.

These measurements are modelled by a system that represents position and clock bias offsets relative to the first epoch of the window, along with fixed bias terms for phase and pseudorange on each signal. The total number of parameters is therefore $n = 4(n_{samples} - 1) + 2n_{sig}$. This system can be solved as a weighted linear least-squares problem. That is, the m measurements are placed into a column vector y, a column vector x is defined to hold the n free parameters, and an m x n size matrix A defines the linear model $y = Ax$. A column vector of scaling factors w is defined, one scaling factor for each measurement, with pseudoranges given a scale $1/\sigma_{PR}$ and phases a scale $1/\sigma_{phase}$. For a given state x, the residuals r are:

$$\mathbf{r} = \mathbf{y} - \mathbf{Ax}$$

The best linear unbiased estimator of the solution $\hat{\mathbf{x}}$ is:

$$\hat{\mathbf{x}} = \underset{\mathbf{x}}{\operatorname{argmin}} \frac{1}{2} \sum_{i} (w_i r_i)^2$$

This solution can be calculated numerically by transforming the problem into standard form:

$$\mathbf{A}' = \operatorname{diag}(\mathbf{w})A,$$

$$\mathbf{y}' = \operatorname{diag}(\mathbf{w})y,$$

and solving

$$(\mathbf{A}'^T \mathbf{A})\hat{\mathbf{x}} = \mathbf{A}'^T \mathbf{y}$$

for $\hat{\mathbf{x}}$

A refinement is to identify and exclude (or de-weight) outliers, so that their influence on the solution is reduced. This can be done iteratively: calculating a solution; identifying measurements that do not fit the solution; and re-calculating the solution while excluding (or de-weighting) the outlying measurements. This is repeated until convergence. Alternatively, outliers can be identified and excluded using a random sample consensus (RANSAC) technique.

Once the solution has been found and the residuals r have been calculated, the processor 120 calculates the root-mean-square (RMS) of the individual residuals over the time window. This gives a measure of how well (or how poorly) each measurement matches the consensus solution over the time window, which is a useful quality indicator for the measurements. A GNSS measurement that exhibits a low RMS residual value within the time window is likely to be a high quality measurement, since it agrees with the consensus. A GNSS measurement that exhibits a high RMS residual value is likely to be a low quality measurement, since it deviates from the consensus. Such a measurement may have been affected by random noise/interference, or a systematic effect such as multipath, over the time window.

Optionally the quality indicators may be used to exclude signals or measurements from the subsequent analysis. That is, if one or both of the quality indicators indicates that a measurement is of very low quality (very low carrier-to-noise density ratio, or very high window RMS residual) then that measurement (or signal) may be entirely excluded from use in inferring the state information.

As a further optional refinement, epochs at which the GNSS receiver is not moving may be excluded from use in the window-based quality indicator. Non-line-of-sight signals (for example, due to reflections) may exhibit entirely consistent delta phase and delta pseudorange characteristics, when the GNSS receiver is static. However, when the GNSS receiver is moving, the signal ray direction has a significant impact on delta phases and non-line-of-sight signals are detectable because their rays come from the wrong direction. Applying the window-based method only when the GNSS receiver is moving (for example, when its estimated speed is greater than 1 m/s) helps to ensure that these confounding effects of non-line-of-sight signals are reduced or eliminated. However, a side effect is that this particular quality indicator cannot be calculated when the receiver is static. This, in turn, may mean that position bounds cannot be calculated when the receiver is static, according to some examples.

It will be noted that the window-based quality indicator is specific to each individual measurement - a pseudorange measurement and a carrier phase measurement from the same GNSS signal will generally be assigned different values of the window-based quality indicator. In contrast, the first quality indicator (carrier-to-noise density ratio) is the same for both the pseudorange measurement and the carrier phase measurement derived from a given GNSS signal.

In principle, any number of quality indicators could be used to condition the error probability distributions. However, in practice, if too many quality indicators are used, the training data used to estimate the model parameters tends to become too sparse over the multidimensional space of quality indicators. Consequently, it may be beneficial to select a small number of quality indicators that offer the greatest predictive power for the parameters of the error probability distributions. In the present example, as explained above, two quality indicators were chosen, for this reason.

In step 220, the processor 120 obtains the quality indicators (receiving the carrier-to-noise density ratio from the signal processing unit 110, and calculating the window-based quality indicator itself).

In step 230, the processor obtains one or more residual error models, which model the probability distribution of errors in each of the GNSS measurements. According to the present example, the error in each GNSS measurement is modelled separately, as a univariate probability distribution. However, it should be understood that this is not essential. In other examples, some or all of the GNSS measurements may be modelled together in a joint, multivariate probability distribution.

The residual error models are defined in advance and are stored in the memory 130. However, they are conditioned on the quality indicators. In the present example, each residual error model comprises a parametric probability distribution, the parameters of which are directly dependent on the values of the quality indicators.

The residual error model for each pseudorange comprises a Student's T-distribution, as described in EP 3 859 397 A1:

$$f_{\text{pr}}(r) = \frac{\Gamma\left(\frac{\nu + 1}{2}\right)}{\sqrt{\nu \pi \sigma^2} \Gamma\left(\frac{\nu}{2}\right)} \left(1 + \frac{r^2}{\sigma^2 \nu}\right)^{-\frac{\nu+1}{2}}$$

Here, r is the residual, $\nu$ is degrees of freedom parameter, $\sigma$ is a scaling parameter which defines the width of the core distribution, and $\Gamma$ is the gamma function. This distribution allows better modelling of error distributions with heavier tails than a Gaussian (normal) distribution. It has been observed by the inventors that the distribution of real pseudorange errors typically has heavy tails of this kind.

The present inventors have recognised that the carrier phase measurements have specific characteristics, which mean that it can be beneficial to model them using a different form of probability distribution. In a "snapshot" analysis, based on a single epoch, like the present example, only the fractional part of the carrier phase measurement contains meaningful information, because of the unknown integer ambiguity in the number of carrier phase cycles. This fractional part is cyclic, in the sense that adding or subtracting any integer number of cycles returns the same fractional part. It is beneficial for the probability distribution modelling the errors to reflect this - that is, the parametric probability distribution should itself be cyclic. Additionally, for some GNSS signals, there is a potential half-cycle ambiguity, because a data message is modulated on the carrier signal using binary phase shift keying (BPSK). If there is an error in bit-detection, it will lead to (approximately) a half-cycle error in the measured carrier phase.

In order to account for these peculiarities in the distribution of carrier phase errors, the present example uses a probability distribution that is cyclic, and which has a multimodal (in particular, bimodal) distribution. The distribution has a large peak at a carrier phase error of zero cycles, and a smaller peak at a carrier phase error of $\pm 0.5$ cycles. The specific parametric distribution used in the present example is as follows:

$$f_{\text{phase}}(r) = \frac{1 - w}{a} \left(1 + \frac{\sin(r\pi)^2}{(\sigma\pi)^2 \nu}\right)^{-\frac{\nu+1}{2}} + \frac{w}{a} \left(1 + \frac{\cos(r\pi)^2}{(\sigma\pi)^2 \nu}\right)^{-\frac{\nu+1}{2}}$$

where r is the phase residual, $\sigma$ is the t-distribution scale parameter (controlling the breadth of the peaks), $\nu$ is the t-

distribution degrees-of-freedom parameter, w is the fraction of measurements which have half-cycle errors, and $\alpha$ is a normalisation term, selected to give a total integrated probability of one in the range (-0.5, 0.5) cycles.

The large peak at a carrier phase error of zero cycles models bits that are demodulated correctly. The smaller peak at a carrier phase error of $\pm 0.5$ cycles models bits that are demodulated incorrectly. In particular, it models the probability that a bit is demodulated incorrectly despite passing a cyclic redundancy check (CRC). In other words, it models bits in which an error occurs and the system fails to detect or correct this by an error detection/correction code. The smaller peak also models the risk of a loss of carrier phase lock between bit periods, since this can also cause a half-cycle error in the carrier phase measurement.

The model fit is similar to the pseudorange fit, but now with three basic parameters ($\sigma$, $\nu$ and w). The normalizing constant $\alpha$ can be calculated given the three basic parameters. The variation of $\sigma$ as a function of the quality indicators is modelled using a third order truncated polynomial series:

$$\sigma_i = c_0 + c_1 a_i + c_2 b_i + c_3 a_i^2 + c_4 a_i b_i + c_5 b_i^2 + c_6 a_i^3 + c_7 a_i^2 b_i + c_8 a_i b_i^2 + c_9 b_i^3$$

where $\sigma_i$ is the t-distribution $\sigma$ parameter for the ith sample, $c_0$, $c_1$, etc. are the truncated power series coefficients, $a_i$ is the first quality indicator (carrier to noise density ratio) and $b_i$ is the second quality indicator (phase window RMS). Both $\nu$ and w are modelled as constants (that is, they do not depend on the quality indicators).

The determination of the truncated power series coefficients is done offline in advance. To gather training data, a GNSS receiver (identical to the one that will use the model) is disposed in a vehicle, and a set of training data is gathered while driving the vehicle around various environments. In general, the greater the variability of signal conditions encountered during the gathering of the training data, the more reliable will be the parameterization of the error distributions. In the present example, measurement residuals were obtained using a real time kinematic (RTK) method, using a local (e.g., within 20 km) reference station and fixing the L1 and the L2 integer ambiguities. This dataset was used for fitting the error model parameters - that is, determining the power series coefficients that map the quality indicators to the t-distribution $\sigma$ parameters. The fitting uses a maximum-likelihood approach. The data included measurements from GPS, BeiDou, Galileo and GLONASS satellites.

One additional advantage of the parametric distribution described above is that it has a continuous first derivative over its entire domain - including at the wrapping boundary between successive phase cycles. This can lend itself to the use of more efficient and/or computationally less complex numerical integration techniques.

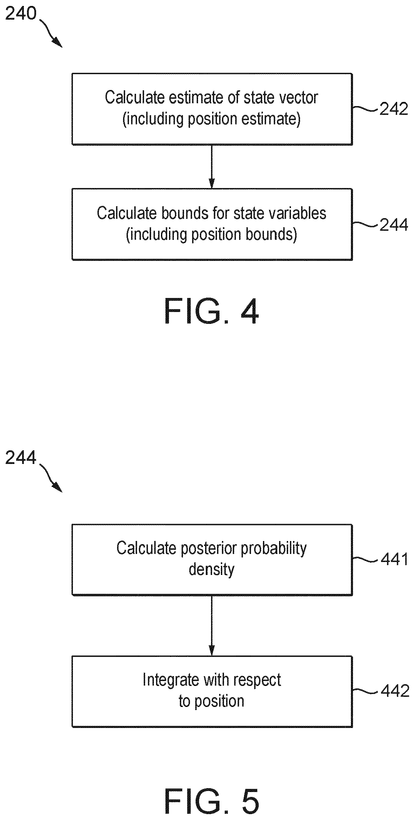

The subsequent steps 221 to 226 are performed for each of the GNSS measurements obtained in step 210. In step 221, the processor 120 selects the next GNSS measurement. In step 222, the processor 120 obtains a definition of a first region and a second region in the space of joint values of the quality indicators. This definition has been generated off-line, in advance, and is stored in the memory 130 of the GNSS receiver 100 (see also Fig. 4 and the associated description later below). According to the present example, the definition divides the space of joint values of the quality indicators into exactly two regions. The space is two-dimensional, because there are two quality indicators in the present example, as explained above. Any given pair of values of the quality indicators defines a point in the joint space. Consequently, any given pair of values of the quality indicators can be said to fall in the first region or the second region.

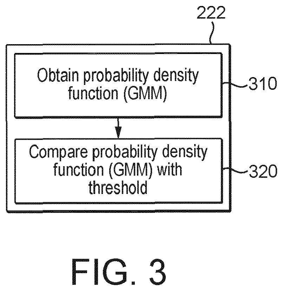

The first region is a "central" region of the joint space, where confidence in the residual error model is high. In particular, this region is characterised by a high density of training data samples, at the time of deriving the one or more conditional residual error models. The second region is a surrounding, peripheral region of the joint space, where confidence in the residual error model is lower. This region is characterised by a relative sparsity of training data samples. In other words, confidence in the one or more conditional residual models is lower here because it relates to combinations of quality indicators that were rare in (or entirely absent from) the training data used to generate the residual error models. The definition of the first and second regions according to the present example will be described in more detail below, with reference to Fig. 3.

Remaining with Fig. 2 for now, the method proceeds to step 223. Here, the processor 120 determines whether the plurality of quality indicators for the present GNSS measurement falls within the first (dense) region or the second (sparse) region. If the pair of quality indicators falls within the first region, then the associated GNSS measurement is marked for processing (see step 224). On the other hand, if the pair of quality indicators falls within the second region, then the associated GNSS measurement is discarded and will not be used in subsequent processing (see step 225).

The method then proceeds to step 226, where the processor 120 checks whether there are more GNSS measurements to evaluate, or whether all GNSS measurements for the present epoch have been considered. If there are further GNSS measurements to consider, the processor returns to step 221, and selects the next GNSS measurement. Once all GNSS measurements have been considered, and either marked for processing or discarded, the method proceeds, to step 240, in which state information is calculated based on the GNSS measurements that were marked for processing - that is, based on those GNSS measurements whose combinations of quality indicators fell in the dense region of quality-indicator-space.

Fig. 3 shows one way of dividing the space of joint values of the quality indicators (step 222), according to the present example. In step 310, the processor 120 obtains a mixture of Gaussians model - also known as a Gaussian mixture model (GMM). This is derived offline in advance. It defines a probability density function of the training data in the joint quality-indicator space. A mixture of Gaussians model is useful because it provides good flexibility to approximate real probability density functions of varying shapes, while at the same time allowing a relatively compact representation (since the number of parameters of the GMM is modest) and quick evaluation of the probability density function at any point in the space.

Given the probability density function (in this case, the GMM), the first region and second region can be defined by a threshold. The first region consists of all points where the probability density function exceeds the threshold - that is where the training data was above a specified threshold density. The second region consists of the remainder of the space - where the training data was not above the specified threshold density, and therefore is judged to be too sparse.

In step 320, the processor 120 evaluates the probability density function (GMM) at the point defined by the current quality indicator values, and compares the result with the threshold. This defines whether the current set (pair) of quality indicator values are in the first region or the second region. If the probability density is above the threshold for the current set of quality indicator values, then these quality indicator values are part of the first region.

Note that, since the first region is defined by reference to a probability density function (in this example, a GMM), it is in general not box-shaped (in two dimensions, not rectangular). This means that the definition of the first region is more sophisticated than simply applying a threshold to one or more of the quality indicators. Of course, such simple thresholds could be applied as additional criteria, in examples according to the present disclosure. However, the present inventors have recognised that they are not sufficient to achieve the reliability sought here. Simple one-dimensional thresholds might be applied, for example, to quality indicators such as carrier to noise density ratio or satellite elevation above the horizon. For example, a GNSS measurement might be discarded if the carrier to noise density ratio of the associated GNSS signal is below a certain minimum threshold, on the basis that the signal is too weak to be reliable. Likewise, a GNSS measurement might be discarded if the elevation of the associated satellite is below a certain minimum threshold. However, such simple heuristics are crude (if used alone) in that they do not take into account joint values of the quality indicators. They do not provide as much information as a non-box-shaped first region and second region, as used according to the present example.

We return now to step 240 of Fig. 2, which will be described with reference to Figs. 4 and 5. In step 240, the processor 120 infers state information based on the one or more residual error models. The state information may comprise the values of state variables, or bounds for those state variables, or both. According to the present example, the state information of primary interest is the position of the GNSS receiver and a bound on the position of the GNSS receiver. This position bound is the protection level. A state vector is defined which includes position variables (among other state variables). The step 240 of inferring state information comprises a step 242 of calculating an estimate of the state vector (including an estimate of the position of the GNSS receiver). It further comprises a step 244 of calculating bounds for the state variables (including a position bound - the protection level). These steps are illustrated in Fig. 4.

Step 244 comprises two sub-steps, as illustrated in Fig. 5. In a first sub-step 441, the processor 120 obtains a prior probability distribution and combines it with the relevant residual error model, to calculate a posterior probability density. The prior and the error probability distribution are combined by multiplication. This is done for each of the one or more residual error models. In step 442, the processor 120 integrates the posterior probability density that was obtained in step 441, in order to calculate the desired state information (in this case, the protection level).

In the following, it will be described in more detail how the protection level is calculated from the one or more residual error models (in particular, by forming and integrating a posterior probability distribution). It should be understood that the posterior probability distribution can also be used to calculate the position estimate, by finding the maximum of the posterior probability distribution with respect to position. The posterior probability distribution can be used in a similar manner to calculate the maximum likelihood estimates of other state variables. To implement this, the step 242 of calculating the estimate of the state vector can be divided into two steps, just like the step 244 of calculating the bounds. The steps are, firstly, calculating the posterior probability density and, secondly, integrating the posterior probability density to estimate the state variables. If both the state variables and their corresponding bounds are to be estimated in the same way, then this can be done without duplicating the steps shown in Fig. 5. That is, the posterior probability density can be calculated in a single step 441. This step can then be followed by a single integration step (for example, like step 442) applied to the posterior probability density, which calculates both the maximum likelihood estimates and the bounds on those estimates, in one integral. In such an example, it should be understood that steps 242 and 244 of Fig. 4 are effectively performed concurrently.

Determining a protection level from a set of GNSS measurements is a statistical problem that depends on the error probability distribution of the measurements. In the present example, a Bayesian method is used for calculating a posterior probability density (that is, a probability density on position), given a set of known error probability distributions of the measurements. The protection level may then be determined by integrating the posterior probability density. According to the present example, the GNSS measurements are taken from different GNSS signals at the same epoch;

this avoids the use of measurements that are correlated in time. The measurements of different GNSS signals at the same epoch can be treated as statistically independent, unlike measurements of the same signal over different epochs. Since the measurements can be treated as statistically independent, it is not necessary to model the errors in a joint distribution. They can be modelled independently by univariate distributions. This makes the posterior probability easier to determine, making it easier to calculate the state information - in particular, the protection level.

When applied to an inference problem given a set of continuous-domain measurements, Bayes formula can be translated into the following equation:

$$P(state|data) = \frac{P(data|state)P(state)}{P(data)}$$

where $P$(state|data) is the probability density of a particular state for a given set of observations, $P$(data|state) is the probability density of a particular set of observations for a given state, P(state) is a prior probability density of the state, and P(data) is the probability density of the set of observations. Information about the state may be inferred from the observables - that is, the GNSS measurements (for example, a pseudorange or a carrier phase). The $P$(state|data) corresponds to a posterior probability density that needs to be determined in order to compute a protection level of a position estimate. P(data) may be treated as an unknown normalization factor, and can be inferred using the fact that an integral of the posterior probability density $P$(state|data) over all states equals one. P(data|state) is closely related to the measurement error probability distribution and may be specified by a mathematical model, as discussed below.

According to the present example, the above restatement of Bayes theorem is applied to GNSS measurements. The state vector $x$ includes position variables. It may also include other variables, including but not limited to a clock bias, an instrumental bias, or an atmospheric parameter. The clock bias may include a receiver clock bias and a satellite clock bias. The GNSS measurements are a set of observations, z, including pseudorange measurements and carrier phase measurements. The processor 120 also obtains the quality indicators $q$ (metadata), which indicate information about the quality of the observations.

The set of observations z can be partitioned into two components: a system model $h(x)$ that relates the state $x$ to the observables of the set of observations z, and a random measurement error component (residual) r:

$$z = h(x) + r$$

The system model includes a mathematical model for the carrier phase and a mathematical model for the pseudorange (examples of which are detailed in EP 3 859 397 A1).

The probability density for the residual r is defined by a function $f_{joint}(r|\theta, q)$, which specifies the probability density for a specified set of residuals r, given error model parameters $\theta$ and the set of quality indicators $q$. Returning to Bayes theorem, the posterior probability density $P(x|z, q, \theta)$ can be expressed as:

$$P(x|z, q, \theta) = \frac{P(z|x, q, \theta)P(x)}{P(z|q, \theta)}$$

Taking the denominator P(z| q, $\theta$) to be an unknown normalization constant, and r = z - $h(x)$, the posterior probability density $P(x|z, q, \theta)$ can be expressed as follows:

$$P(x|z, q, \theta) \propto P(z|x, q, \theta)P(x)$$

$$P(x|z, q, \theta) \propto f_{joint}(z - h(x)|\theta, q)P(x)$$

As explained above, in determining the posterior probability density $P(x|z, q, \theta)$, the observables from a single measurement epoch are considered. For a single measurement epoch, since there is no time correlation between the measurements, the measurements can be considered as independent. Thus, the joint probability density $f_{joint}(r|\theta, q)$ can be calculated as a simple product of the independent probability density $f(r|\theta, q)$ of each observation:

$$f_{joint}(z - h(x)|\theta, q) = \prod_i f(z_i - h_i(x)|\theta, q_i)$$

Thus, the definition of the posterior probability density can be simplified as follows:

$$P(x|z, q, \theta) \propto P(x) \prod_i f(z_i - h_i(x)|\theta, q_i)$$

In this way, the measurement error distribution is simplified to a one dimensional function $f(r|\theta, q)$ of the residual r, and this error distribution may be determined using experimental data. A protection level of a position estimate may be further determined from the posterior probability density $P(x|z, q, \theta)$, by integrating the posterior probability density $P(x|z, q, \theta)$ over the state x.

The integration may be done numerically, for example, using Markov chain Monte Carlo (MCMC). In the present example, a Hamiltonian MCMC method is used for the numerical integration. The use of MCMC methods takes advantage of the continuous first derivative in the error probability distribution for each carrier phase measurement (discussed previously above). Further details of suitable numerical integration strategies are provided in EP 3 859 397 A1.

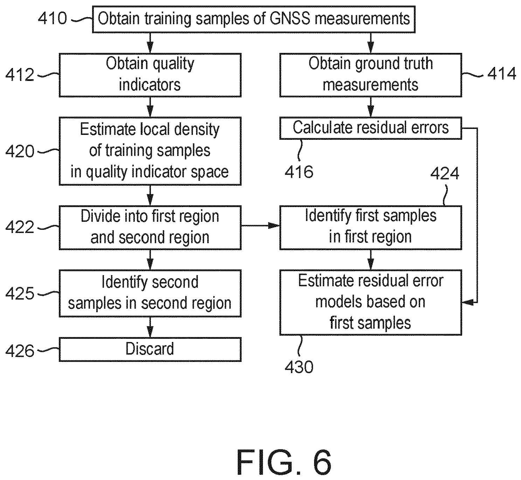

Fig. 6 is a flowchart illustrating a method of estimating one or more residual error models according to an example. First, the processor 120 will obtain training data for the estimation process. In step 410, the processor 120 obtains a plurality of training samples for each of the GNSS measurements whose residual error is to be modelled. In step 412, the processor 120 obtains quality indicators associated with the training samples. At least two quality indicators are obtained for each training sample. In the present example, there are two quality indicators, as described already above in the context of Fig. 2.

The processor 120 also obtains a residual error associated with each of the training samples. In the example of Fig. 6, the processor 120 obtains the residual errors by first obtaining a ground truth measurement corresponding to each training sample (see step 414). The ground truth measurements may be obtained from a more accurate positioning system than the one for which the residual errors are being characterised. For example, the ground truth measurements may be obtained from a real-time kinematic (RTK) positioning system, as mentioned already above. In step 416, the processor 120 compares the training samples with the respective ground truth measurements, to calculate the residual error associated with each measurement (training sample).

Before proceeding to estimate the one or more residual error models, the processor 120 analyses the quality indicators obtained in step 412 to determine which training samples to include in the model estimation and which training samples to exclude. In particular, in step 420, the processor 120 estimates a local density of the training data over the space of joint values of the quality indicators, to produce a probability density function defined over that space. In the present example, this probability density function is represented by a parametric function - in particular, a Gaussian mixture model (GMM). The parameters of the mixture model are estimated from the pairs of quality indicators associated with the training samples. As will be familiar to those skilled in the art, maximum likelihood parameters for a GMM can be derived using an expectation-maximisation (EM) algorithm (among other possible parameter estimation approaches). The parameters estimated consist of the mean and covariance of each of the plurality of Gaussian distributions in the model, as well as a weight - also known as a mixture proportion - for each Gaussian, indicating the prevalence of samples from that Gaussian in the overall mixture.

In step 422, the processor 120 divides the space of joint values of the quality indicators into two regions, based on the estimated probability density function - a first region, in which the training data is relatively dense, and a second region, in which the training data is relatively sparse. In the present example, this is done by applying a threshold to the probability density function. The first region is defined as the region where the probability density function is above the threshold, and the second region is defined as the region where the probability density function is less than or equal to the threshold. The threshold may be defined a number of ways. In the present example, it is selected such that the first region contains a predetermined proportion of the training samples (99% in the present implementation). The threshold is found by evaluating the GMM density at the location of each sample, ordering the resulting density values from largest to smallest, and choosing a threshold that identifies the appropriate percentile (that is, identifies the 1% of samples associated with the smallest GMM density values)

The definition of the first region and second region, obtained in step 422 can be used subsequently in step 222 of the method of Fig. 2. In the method of Fig. 4, it is also used to determine which samples to use for estimating the one or more residual error models. In step 424, the processor 120 identifies all of the training samples that fall within the first region. (These are denoted "first samples".) In step 425, the processor 120 identifies all of the training samples that fall in the second region. (These are denoted "second samples".) In step 426, the processor 120 discards the second samples. The estimation of the one or more residual error models will ignore these samples. In step 430, the processor 120 estimates the one or more residual error models using only the first samples.

As explained already above, in the present example a residual error model is estimated separately for each GNSS measurement. It should be understood that the first region and second region of the joint quality indicator space can be defined differently for different GNSS measurements. For instance, the first region and second region can be defined differently for different GNSS systems (GPS, Galileo, GLONASS, BDS, etc.), or even for different signals from the same GNSS (for example, GPS L1 and GPS L2).

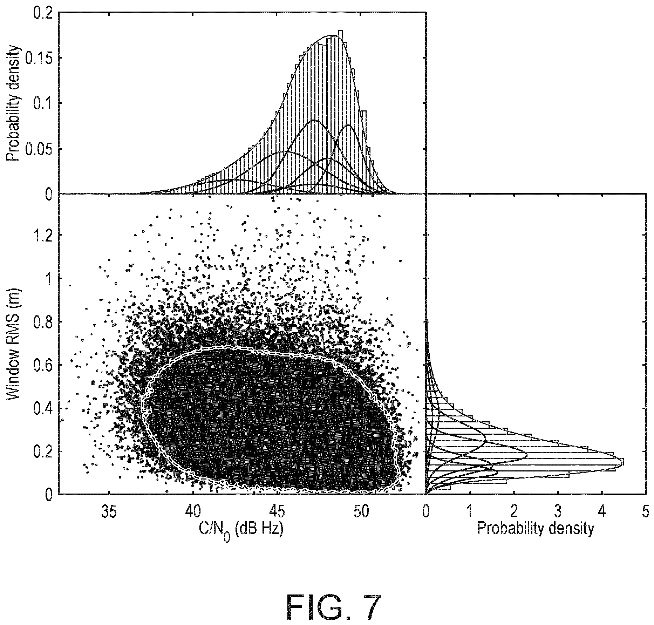

Fig. 7 shows an example of a space of joint values of two quality indicators, for a given GNSS measurement, divided into dense and sparse regions according to an example. Each pair of quality indicators is shown as a point on a scatter plot. The first quality indicator, on the horizontal axis of the scatter plot, is the carrier to noise density ratio $C/N_0$. The second quality indicator, on the vertical axis, is the window-based quality metric described above. The boundary of the dense, central (first) region is indicated by the dotted line. The marginal distribution of the probability density function is plotted on each axis. Each bar graph is a histogram of the actual samples. The heavy black lines show the individual Gaussian components of the mixture model. The finer black line, approximating the shape of each marginal histogram, is the sum of these Gaussian probabilities - that is, the probability density function defined by the GMM. It should be understood that although only the marginal distributions are plotted, the GMM is defined over the two-dimensional joint space of the quality indicators.

Examples disclosed herein have one or more technical effects. By considering observables from only a single epoch of GNSS measurements, a major source of non-independence (namely, time correlation) is removed and the error distribution on each signal is modelled individually as a one-dimensional probability density function, leading to fast and rigorous determination of a protection level. Using a non-Gaussian error probability density model allows for proper consideration of the tail probability density, thereby ensuring accuracy of the process. Excluding or de-weighting the outliers of the measurements allows for enhanced accuracy and consistency of the determination. Using a cyclic probability density model for the carrier phase measurements enables more faithful modelling of the error distributions for these measurements. The use of a bimodal parametric distribution helps ensure faithful modelling of the errors for data-carrying GNSS signals, without a significant increase in computational complexity. The use of a parametric distribution having a continuous first derivative also helps to moderate the computational complexity of the implementation, by facilitating the use of computationally efficient numerical integration methods.

As explained above, examples described herein restrict the use of GNSS measurements to those that are associated with combinations of quality indicators that have been observed relatively frequently in training data. This is done both when estimating the residual error models "offline" in advance (that is, in the training phase), and when using the residual error models "online" (for example, in real time) to infer state information such as a position fix and position bounds. GNSS measurements that are associated with rarely-seen (or never seen) combinations of quality indicators are excluded from both the residual error model estimation and the state inference. This approach helps to ensure the reliability of the state information, by preventing unexpected (and not modelled) variations from corrupting the state estimation.

It should be understood that the scope of the present disclosure is not limited to the examples described above. Many variations will be apparent to those skilled in the art, based on the foregoing description.

It should be understood that the specific parametric distributions used in the examples above (for the one or more residual error models and/or for modelling the probability density function over the space of joint quality indicators) are not limiting. Those skilled in the art may select other distributions (parametric or non-parametric) that have the general characteristics explained above. For example, other parametric distributions could be selected or designed for phase measurements, which have cyclic behaviour and continuous first derivatives. Optionally they may also have a multimodal (for example, bimodal) structure. One suitable non-parametric model for representing the probability density function over the space of joint quality indicators makes use of the k-nearest-neighbours (k-NN) algorithm.

As mentioned already above, although the examples have focused largely on the calculation of state bounds (in particular, position bounds in the form of a protection level), the residual error models are useful for calculating state information other than (or in addition to) state bounds. In particular, the residual error models may be useful for calculating maximum-likelihood estimates of the state itself.

In general, in the flowcharts of Figs. 2-6, the arrows between the steps do not necessarily imply a causal relationship between those steps. They merely indicate one exemplary order in which the steps may be performed. Method steps may be carried out in a different order from the exemplary order shown in the drawings. For example, the step 220 of obtaining the quality indicators need not always be performed after the step 210 of obtaining the GNSS measurements. Although some quality indicators (such as the window-based quality indicator, described above) are indeed calculated based on the GNSS measurements, other quality indicators are not calculated from the GNSS measurements. Such quality indicators may be calculated before (or at the same time as) the GNSS measurements are obtained.

In the examples described above, there were two quality indicators - namely, the carrier to noise density ratio and a window-based quality indicator. These have been found by the inventors to offer a complementary combination;

however, it should be understood that the scope of the present disclosure is not limited exclusively to the use of these two quality indicators.

In the example of the window-based quality indicator described above, the window was symmetric about the epoch of interest. This is not essential. In general, any window that includes the epoch of interest may be used. For example, the latency of the algorithm may be reduced by choosing a window that ends at the epoch of interest. In other examples, the epoch may be near to, but outside, the window.

It should be understood that various components illustrated in Fig. 1 may be implemented in hardware, or software, or a mixture of both. Furthermore, some components may be grouped together in a given implementation or may be implemented separately. In the present implementation, block 105 is implemented entirely in hardware, block 110 is implemented partially in hardware, and the remaining components (downstream in the signal processing chain) are implemented in software. In some examples, the navigation filter 122 may be implemented in a separate software module, running on a separate processor from the processor 120. Other implementations are possible, which divide and distribute the various functions differently between hardware and software, or between different hardware components, software modules and/or processors running the software.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

**Claims**

1. A method of processing a plurality of GNSS measurements to infer state information, the method comprising:

   obtaining (210) the plurality of GNSS measurements,
   for each GNSS measurement:

      obtaining (220) a plurality of quality indicators associated with that GNSS measurement;
      dividing (222) a space of joint values of the plurality of quality indicators into at least a first region and a second region, wherein neither the first region nor the second region is box-shaped;
      determining (223) whether the plurality of quality indicators fall within the first region or the second region; and
      responsive to the plurality of quality indicators falling within the first region, determining (224) that the GNSS measurement should be included in the processing to infer the state information, and

   calculating (240) the state information based on those GNSS measurements that it was determined should be included.

2. The method of claim 1, wherein, for at least one of the GNSS measurements, the space consists of the first region and the second region.

3. The method of any one of the preceding claims, wherein, for at least one of the GNSS measurements, the first region comprises a central region of the space of joint values, and/or the second region comprises a peripheral region of the space.

4. The method of any one of the preceding claims, wherein, for at least one of the GNSS measurements, the second region surrounds the first region in the space of joint values.

5. The method of any one of the preceding claims, further comprising, for at least one of the GNSS measurements, obtaining (310) a probability density function defined over the space of joint values of the plurality of quality indicators, wherein the first region is defined as the region where the probability density function exceeds a predefined threshold.

6. The method of claim 5, wherein the probability density function is represented by one of:

   a non-parametric function; and
   a parametric function, the parametric function optionally comprising at least one of:

      a Gaussian function; and
      a sum of Gaussian functions.

7. The method of any one of the preceding claims, further comprising

   obtaining (230), for the plurality of GNSS measurements, one or more residual error models, describing a probability distribution of errors in the GNSS measurements, wherein the probability distribution depends on the plurality of quality indicators, and
   wherein the calculation (240) of the state information is based on the one or more residual error models.

8. The method of any one of the preceding claims, wherein the plurality of quality indicators comprises one or both of:

   a carrier-to-noise density ratio of a GNSS signal on which the respective GNSS measurement was made; and
   a window-based quality indicator, based on gathering similar GNSS measurements in a time window containing or near to an epoch of interest.

9. A method of estimating one or more residual error models describing a probability distribution of errors in a plurality of GNSS measurements, wherein the probability distribution depends on a plurality of quality indicators, and wherein the one or more residual error models are to be used for inferring state information based on GNSS measurements, the method comprising:

   obtaining (410, 412, 414, 416) training data comprising a plurality of samples of the plurality of GNSS measurements, quality indicators associated with the samples, and residual errors associated with the plurality of samples;

estimating (420) a local density of the training data over a space of joint values of the plurality of quality indicators, to produce a probability density function; and

estimating (430) the one or more residual error models based on the training data.

**10.** The method of claim 9, comprising:

before estimating the one or more residual error models, dividing (422) the space of joint values of the plurality of quality indicators into at least a first region and a second region, wherein the first region is a region where the training data is relatively dense and the second region is a region where the training data is relatively sparse;

identifying (424) first samples that fall within the first region;

identifying (425) second samples that fall within the second region; and

estimating (430) the one or more residual error models based on the first samples.

**11.** The method of estimating a residual error model, of claim 9 or claim 10, performed in advance, followed by the method of processing a plurality of GNSS measurements of any one of claims 1 to 10.

**12.** A computer program comprising computer program code configured to cause one or more processors to perform all the steps of the method as claimed in any one of the preceding claims when said computer program is run on said one or more processors.

**13.** A GNSS receiver (100) comprising:

a signal processing unit (110), configured to produce a plurality of GNSS measurements; and
at least one processor (120), configured to:

obtain (210) the plurality of GNSS measurements, and
for each GNSS measurement:

obtain (220) a plurality of quality indicators associated with that GNSS measurement;
divide (222) a space of joint values of the plurality of quality indicators into at least a first region and a second region, wherein neither the first region nor the second region is box-shaped;
determine (223) whether the plurality of quality indicators fall within the first region or the second region; and
responsive to the plurality of quality indicators falling within the first region, determine (224) that the GNSS measurement should be included in processing to infer state information,

wherein the at least one processor is further configured to calculate (240) the state information based on those GNSS measurements that it was determined should be included.

FIG. 1

Obtain GNSS measurements —~210

Obtain quality indicators —~220

Obtain residual error models —~230

221 ~— Select next GNSS measurement

Obtain definition of first region
and second region ~222

Y     Quality indicators 223     N
in first region
?

Mark GNSS
measurement for ~224   225~ Discard
processing GNSS
measurement

More GNSS 226
measurements Y
to test
?

N

Calculate state information
based on GNSS measurements ~240
marked for processing

# FIG. 2

222

Obtain probability density
function (GMM)
~310

Compare probability density
function (GMM) with
threshold
~320

# FIG. 3

240

Calculate estimate of state vector
(including position estimate) ~242

↓

Calculate bounds for state variables
(including position bounds) ~244

FIG. 4

244

Calculate posterior probability
density ~441

↓

Integrate with respect
to position ~442

FIG. 5

410 — Obtain training samples of GNSS measurements

412 — Obtain quality indicators

414 — Obtain ground truth measurements

420 — Estimate local density of training samples in quality indicator space

Calculate residual errors

416

422 — Divide into first region and second region

Identify first samples in first region

424

425 — Identify second samples in second region

Estimate residual error models based on first samples

430

426 — Discard

# FIG. 6

FIG. 7

Europäisches
Patentamt

European
Patent Office

Office européen
des brevets

# EUROPEAN SEARCH REPORT

Application Number

EP 22 18 4206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EUGENIO REALINI ET AL: "goGPS: open source software for enhancing the accuracy of low-cost receivers by single-frequency relative kinematic positioning", MEASUREMENT SCIENCE AND TECHNOLOGY, IOP, BRISTOL, GB, vol. 24, no. 11, 16 October 2013 (2013-10-16), page 115010, XP020252550, ISSN: 0957-0233, DOI: 10.1088/0957-0233/24/11/115010 [retrieved on 2013-10-16] * p. 8, 9 * | 1-13 | INV. G01S19/39 ADD. G01S19/43 G01S19/32 |
| A | YUN ET AL: "Carrier Phase-based RAIM using a Gaussian Sum Filter", GNSS 2009 - PROCEEDINGS OF THE 22ND INTERNATIONAL TECHNICAL MEETING OF THE SATELLITE DIVISION OF THE INSTITUTE OF NAVIGATION (ION GNSS 2009), THE INSTITUTE OF NAVIGATION, 8551 RIXLEW LANE SUITE 360 MANASSAS, VA 20109, USA, 25 September 2009 (2009-09-25), pages 1666-1674, XP056010612, * the whole document * | 1-6,8, 12,13 | |
| A | US 9 244 172 B2 (TOPCON POSITIONING SYSTEMS INC [US]) 26 January 2016 (2016-01-26) * the whole document * | 1-6,8, 12,13 | TECHNICAL FIELDS SEARCHED (IPC) G01S |
| A | US 10 684 375 B2 (SAMSUNG ELECTRONICS CO LTD [KR]) 16 June 2020 (2020-06-16) * the whole document * | 1-6,8, 12,13 | |

The present search report has been drawn up for all claims

| Place of search | Date of completion of the search | Examiner |
|---|---|---|
| Munich | 3 May 2023 | González Moreno, J |

EPO FORM 1503 03.82 (P04C01)

Europäisches
Patentamt

European
Patent Office

Office européen
des brevets

Application Number

EP 22 18 4206

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

**Application Number**

**EP 22 18 4206**

The Search Division considers that the present European patent application does not comply with the
requirements of unity of invention and relates to several inventions or groups of inventions, namely:

     **1. claims: 1-6, 8, 12, 13**

          **outlier detection and satellite selection**
              ---

     **2. claims: 7, 9-11**

          **protection levels determination**
              ---

EP 4 307 012 A1

**ANNEX TO THE EUROPEAN SEARCH REPORT
ON EUROPEAN PATENT APPLICATION NO.**

EP 22 18 4206

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| US 9244172 | B2 | 26-01-2016 | EP | 2864809 A1 | 29-04-2015 |
| | | | US | 2013342396 A1 | 26-12-2013 |
| | | | WO | 2013192155 A1 | 27-12-2013 |
| US 10684375 | B2 | 16-06-2020 | KR | 20160084316 A | 13-07-2016 |
| | | | US | 2016195617 A1 | 07-07-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3859397 A1